# EUROPÄISCHE PATENTSCHRIFT

(11) **EP 2 043 937 B1**
(45) Veröffentlichungstag und Bekanntmachung des Hinweises auf die Patenterteilung: **06.09.2017**
(21) Anmeldenummer: 06762838.8
(22) Anmeldetag: 26.07.2006
(51) Int. Cl.: B66B 5/22, F16D 63/00

(54) **BREMS- BZW. FANGEINRICHTUNG ZUR TEMPORÄREN SCHUTZRAUMABSICHERUNG UND DERGL.**
BRAKING OR HOLDING DEVICE FOR TEMPORARILY ENSURING A SAFE PROTECTED AREA AND THE LIKE
DISPOSITIF DE FREINAGE OU DE BLOCAGE DESTINÉ À LA SÉCURISATION TEMPORAIRE D'UN ESPACE DE SÉCURITÉ ET SIMILAIRES

(43) Veröffentlichungstag der Anmeldung: 08.04.2009
(73) Patentinhaber: Wittur Holding GmbH, 85259 Wiedenzhausen (DE)
(72) Erfinder: ADLDINGER, Wolfgang, 86159 Augsburg (DE); ERNDL, Markus, A-3270 Scheibbs (AT); KARNER, Jürgen, A-3243 St. Leonhard/Forst (AT)
(74) Vertreter: Misselhorn, Hein-Martin
(86) Internationale Anmeldenummer: PCT/EP2006/007403
(87) Internationale Veröffentlichungsnummer: WO 2008/011896

(56) Entgegenhaltungen:
- EP-A1- 0 841 280
- EP-A1- 1 209 117
- WO-A1-2006/077243
- JP-A- 2004 250 178

## Beschreibung

Die Erfindung betrifft einen Aufzug mit einer Brems- bzw. Fangeinrichtung für eine Aufzugskabine, die in einem Schacht entlang von vertikalen Führungsschienen geführt ist, wobei sich die Brems- bzw. Fangeinrichtung einer mit einer Reibfläche versehenen Rolle als Bremskörper bedient, die reibend in einem schräg zur Führungsschiene verlaufenden, genuteten Spalt geführt ist, und elastisch an die Führungsschiene angepresst wird, um so auch dort eine entsprechende Reibung zu entfalten. Die Erfindung betrifft ferner die Verwendung einer solchen Brems- bzw. Fangeinrichtung. Der Begriff "Aufzugskabine" wird hier und im Folgenden als Sammelbegriff verwendet und umfasst sowohl herkömmliche Kombinationen aus Kabinen oder Plattformen aller Art, die von einem Fahrkorbrahmen getragen werden, als auch fahrkorbrahmenlose Konstruktionen.

Brems- bzw. Fangeinrichtungen au Aufzügen dienen dazu, eine Aufzugskabine im Falle einer unzulässig hohen Fahrgeschwindigkeit, wie sie z. B. bei einer Fehlfunktion der Steuerung oder eines Antriebs bzw. seiner Bremse sowie einem Seilbruch auftreten kann, abzubremsen.

Eine entsprechende Bremsfangeinrichtung ist zum Beispiel aus der Europäischen Patentanmeldung EP 0 841 280 A1 bekannt. Die EP 0841 280 A1 offenbart einen Aufzug mit einer Brems- bzw. Fangeinrichtung, gemäß dem Oberbegriff des Anspruchs 1. Die von besagter Patentanmeldung vorgeschlagene Bremsfangeinrichtung ist von moderner Bauart, sie kommt mit nur wenigen Bauteilen aus. Anders als die älteren Bremsfangeinrichtungen aus dem Stand der Technik, benötigt sie keine zusätzlichen Schrauben- oder Tellerfedern. um einen definierten Verlauf der Bremskraft bis hin zum Kabinenfang vor-zugeben. Stattdessen ist das zur Montage an der Aufzugskabine vorgesehene und die Bremsrolle lagernde Gehäuse der Bremsfangeinrichtung (im Weiteren: der Druckkörper) hier so ausgebildet, dass es selbst eine definierte Federwirkung ausübt. Dies, indem der Druckkörper bei aktivierter Bremse auf der einen Seite unmittelbar auf die Führungsschiene drückt und auf der anderen Seite mittelbar über die Bremsrolle auf die Führungsschiene drückt. Umso weiter die Bremsrolle in die ihr zugeordnete Nut entlang Richtung Anschlag gezogen wird, desto stärker wird der Druckkörper elastisch aufgedehnt. Entsprechend höher fallen die aktuellen Bremskräfte aus. Diese Federwirkung führt zusammen mit dem entsprechendem Layout der Nut bzw. des führenden Spalts, in der die Bremsrolle unter starker Reibung abläuft, dazu, dass sich die gewünschte, definierte Bremswirkung einstellt.

Ein großer Vorteil dieser bekannten Bremsfangeinrichtung ist insbesondere der, dass ihr spezieller Aufbau einer Fehlausrichtung zwischen der Führungsschiene und der Bremsfläche entgegenwirkt. Daher verursacht der Einsatz, d. h. die Aktivierung dieser Bremsfangeinrichtung, nur einen geringen Verschleiß an der Führungsschiene. Auch die Bremsfangeinrichtung selbst unterliegt nur einem geringen Verschleiß.

Wie diese bekannte Bremsfangeinrichtung ausgelöst wird, wird in besagter Patentanmeldung nicht explizit beschrieben.

Für den Fachmann ist jedoch leicht erkennbar, dass diese Bremsfangeinrichtung für eine mechanische Betätigung üblicher Art vorgesehen ist. Dies, weil ihre Bremsrolle mit einem nach außen über das Gehäuse und sein Abdeckblech hinausstehenden, einseitigen Achsstummel ausgestattet ist. Dieser Achsstummel soll offensichtlich mittelbar oder unmittelbar mit dem im Schacht umlaufenden Seil eines üblichen Geschwindigkeitsbegrenzersystems verbunden sein, vgl. Fig. 3 der EP 0 841 280 A1.

Der Vollständigkeit halber sei die an und für sich bekannte Funktion eines solchen Geschwindigkeitsbegrenzersystems hier noch kurz erläutert, angewandt auf den konkreten Fall:

Ein solches Geschwindigkeitsbegrenzersystem besteht aus einem entlang des gesamten Schachts umlaufenden Seil, das oben und unten über je eine Rolle geführt wird. Das Seil ist an der Einrückstange der Brems- bzw. Fangeinrichtung befestigt, welche ihrerseits am Fahrkorbrahmen bzw. an der Aufzugskabine festgelegt ist und somit im Schacht auf und ab fährt. Das Seil wird also vom Fahrkorb bzw. der Aufzugskabine mitgenommen. Es treibt so seine beiden Rollen an. Die i. d. R. obere Rolle ist Teil einer in Abhängigkeit von der Umlaufgeschwindigkeit des Seils ansprechenden Bremse. Sobald das Seil mit einer Geschwindigkeit umläuft, die einer unzulässigen Übergeschwindigkeit der Aufzugskabine entspricht, spricht die Bremse an und bremst so die obere Rolle ab. Das Seil des Geschwindigkeitsbegrenzers bleibt dadurch nun relativ zur Bewegung der Aufzugskabine zurück - und zieht bei der hier zur Diskussion stehenden Konstruktion des Standes der Technik die Bremsrolle relativ zu ihrem Gehäuse nach oben, in die Nut hinein. Die Bremsrolle kommt auf diese Art und Weise mit der Führungsschiene in Kontakt. Sie wird nun selbsttätig weiter in die Nut hineingetrieben und bremst entsprechend.

Ein weiterer Punkt ist, dass es bei der bekannten Bremseinrichtung augenscheinlich keine Rolle spielt, ob nach einem Ansprechen im Störfall manuell eingegriffen werden muss, um die Bremseinrichtung aus ihrer Fangposition zu lösen, oder nicht.

Denn es ist klar, dass sie ohnehin nur für eine Aktivierung im Falle einer Übergeschwindigkeit, d. h. einer Störung,vorgesehen ist und im Normalbetrieb unbenutzt bleibt. Um die Aufzugskabine nach einer Störung wieder außer Fang zu bringen, ist ohnehin der Einsatz geschulten Servicepersonals erforderlich. Daher spielt es keine Rolle, ob sich die bekannte Bremsfangeinrichtung auf kürzestem Wege, also schon bei einem nur geringen Wiederanfahren der Kabine nach oben außer Fang bringen lässt oder ob zu diesem Zwecke gar manuell eingegriffen werden muss.

Für andere Zwecke als das Stillsetzen der Aufzugskabine im Falle einer Übergeschwindigkeit lässt sich die bekannte Bremsfangeinrichtung in der Praxis angesichts all dessen nicht sinnvoll einsetzen.

Sofern zu irgendwelchen Zwecken bei Aufwärtsfahrt oder bei Abwärtsfahrt außerhalb von Störfällen eine Bremswirkung benötigt wird - etwa um die Aufzugskabine willkürlich direkt gegenüber den Führungsschienen und unabhängig von der antriebsseitigen Bremse stillsetzen zu können - muss bei Aufzugsanlagen, die sich der vorbekannten Bremsfangeinrichtung bedienen, eine zusätzliche Betriebsbremse vorgesehen werden.

Andere im Stand der Technik bekannte, hier nicht näher erläuterte Brems- bzw. Fangeinrichtungen arbeiten nicht mit Bremsrollen, sondern mit Bremskeilen. Letztere wirken auf die unterschiedlichste Art und Weise mit Schrauben- oder Tellerfedern zusammen und sorgen so für die benötigte Bremskraft, d. h. für die erforderliche Friktion an den Schienen. Diese bekannten Bremsfangeinrichtungen sind aufwendiger als die eingangs genannte Einrichtung, gewährleisten i. d. R. keine gleichmäßige Anpressung an die Führungsschiene und lassen sich nicht fernbedienen - zumindest nicht fernbedient wieder lösen, in dem Sinne, dass die Bremskeile bzw. -organe ohne manuellen Eingriff zuverlässig wieder in eine definierte, inaktive Ruhestellung zu bringen sind.

Demgegenüber ist es Aufgabe der Erfindung, eine Brems-, Fang- oder Bremsfangeinrichtung anzugeben, die auch im regulären Betrieb Funktionen übernehmen kann, d. h. im Betrieb außerhalb von unzulässigen Übergeschwindigkeiten.

Erfindungsgemäß wird dies bei einer Brems- bzw. Fangeinrichtung der eingangs genannten Art durch die Merkmale des Anspruchs 1 erreicht.

Die vorgeschlagenen Maßnahmen führen zu einer Brems- bzw. Fangeinrichtung, die auch im regulären Betrieb Funktionen übernehmen kann.

Dies zum einen schon deshalb, weil sie bidirektional wirkt und damit eine entsprechende Funktionalität nicht nur bei Abwärts- sondern gleichermaßen auch bei Aufwärtsfahrt zur Verfügung stellen kann.

Ein entscheidender Aspekt ist zudem, dass sich die Brems- bzw. Fangeinrichtung ohne weiteres, fernbedient von der Aufzugssteuerung aus, auch zuverlässig wieder lösen lässt. Dies, indem die Aufzugskabine - bezogen auf ihre vorherige Fahrtrichtung - ein kleines Stück zurückgefahren wird. Wegen der auf Grund entsprechender Druckkörperauslegung gewährleisteten Reibungsverhältnisse kommt die Rolle hierdurch sofort frei, wälzt sich zurück und kann dann vom Aktuator sofort aktiv wieder in ihre Ruheposition gezogen und dort gehalten werden.

Auf Grund der durch den Anspruch vorgegebenen, speziellen Gestaltung ist außerdem sichergestellt, dass die Reibfläche des Bremsorgans an der Führungsschiene gleichmäßig (kein Verkanten der Rolle) und mit einem genau vorausbestimmten, d. h. niemals übermäßig großen Druck zur Anlage kommt. Dadurch wird die Gefahr einer ungleichmäßigen Anpressung an die Führungsschiene vermieden und auch sonst der Verschleiß sowohl auf Seiten der Rolle als auch der Führungsschiene minimiert. Auch damit ist eine Voraussetzung geschaffen, um die Brems- bzw. Fangeinrichtung auch im regulären Betrieb Funktionen übernehmen zu lassen. Denn ein in erster Linie Notfunktionen übernehmendes Bauteil eignet sich natürlich nur dann für einen Einsatz auch im regulären Betrieb, wenn sichergestellt ist, dass dieser Einsatz im regulären Betrieb nicht womöglich dazu führt, dass das betreffende Bauteil im worst case seine Notfunktion nicht mehr erfüllen kann, da zwischenzeitlich verschlissen.

Vorzugsweise wird die Brems- bzw. Fangeinrichtung so ausgestaltet, wie von Anspruch 2 vorgeschlagen. Hintergreift der Druckkörper die Führungsschiene, ergibt sich auf einfache Art und Weise ein geschlossener Kraftfluss. Gemäß der Erfindung arbeitet die Brems- bzw. Fangeinrichtung in etwa nach dem von modernen Fahrzeugscheibenbremsen her bekannten "Schwimmsattelprinzip". Hierdurch wird vom ersten Ansprechen der Bremse an eine sehr gleichmäßige Bremswirkung gewährleistet. Vor allem aber wird jegliche Biegebelastung der Führungsschiene sicher vermieden, auch bei sehr aggressiver Bremsung im Notfall. Das Schwimmsattelprinzip ist insbesondere auch von Vorteil, wenn die Brems- und Fangeinrichtung Aufgaben im regulären Aufzugsbetrieb zu übernehmen hat. Nämlich Aufgaben, im Rahmen derer aus Gründen der Verschleißminimierung nicht aus voller Fahrt, sondern aus a priori moderaten Geschwindigkeiten abgebremst werden soll. Das Schwimmsattelprinzip gewährleistet auch dann ein schnelles und sicheres Ansprechen der Brems- bzw. Fangeinrichtung. Dies deshalb, da die Rolle weder erst die Schiene elastisch verformen noch erst die gesamte, entsprechend massenträge Aufzugskabine um den Betrag des Spiels, das ihre Führung ihr quer zur Führungsschiene lässt, in Bewegung setzen muss, um die Gegenbremsbacke richtig fest an der Führungsschiene zur Anlage zu bringen.

Idealerweise ist die Schwimmsattelführung (die notwendigerweise am Druckkörper angreift) insbesondere auch seitens des Druckkörpers so gestaltet, dass sich der Druckkörper ungehindert verformen kann, ohne dabei die Funktionalität der Führung zu beeinträchtigen. Um dies zu erreichen, ist die Brems- bzw. Führungseinrichtung vorzugsweise so gestaltet, wie von den Ansprüchen 3 bis 5 vorgegeben.

Außerdem ist eine solche Bremseinrichtung in besonderem Maße auch für Aufzüge geeignet, deren Aufzugskabinen an lediglich einer oder zwei an ein und derselben Wand befestigten Führungsschienen geführt sind, oder für zentral bzw. exzentrisch geführte Kabinen mit 2, 4 oder 6 Schienen. Dies auf Grund der Tatsache, dass die Reibfläche jedes der Bremsorgane gleichmäßig und in genau vorausbestimmter Weise sowie ohne übermäßigen Druck an der zugehörigen Führungsschiene zur Anlage kommt. Die Verwirklichung des Schwimmsattelprinzips trägt ggf. gerade in den vorbeschriebenen Anwendungsfällen das ihre dazu bei.

Durch die Merkmale des Anspruchs 6 wird eine Schwächung der Steifigkeit des einen (der Fahrtrichtung der Aufzugskabine 35 nach oben entsprechenden) Abschnitts des Druckkörpers erreicht, wodurch die Anpresskraft des Bremsorgans bei einer Bremsung bei der Aufwärtsfahrt der Aufzugskabine reduziert wird. Dadurch ergibt sich bei der Bremsung in Fahrtrichtung nach oben eine geringere Verzögerung, wodurch ein Abheben der Passagiere vom Boden der Aufzugskabine einfach vermieden werden kann.

Eine in konstruktiver Hinsicht sehr einfache und mühelos fernsteuerbare Lösung ergibt sich durch die Merkmale des Anspruchs 7. Durch die Merkmale des Anspruchs 7 ist es auf einfache Weise möglich, das Bremsorgan im Normalbetrieb in einem geringen Abstand von der Oberseite der zugeordneten Führungsschiene zu halten. Im Auslösefall der Bremseinrichtung wird die Rolle sicher in Kontakt mit der Führungsschiene gebracht und beginnt sich zu drehen, wodurch diese gegen ein Ende des Spalts abrollt und sich mehr und mehr an die Führungsschiene anpresst und eingeklemmt wird, wodurch es zum Abbremsen der Aufzugskabine kommt.

Von besonderer Bedeutung gerade für eine Brems- bzw. Fangeinrichtung, die auch im Normalbetrieb Aufgaben übernehmen soll, ist die weitere Verbesserung durch die in Anspruch 8 vorgeschlagene Maßnahme. Diese gestattet es, von der Aufzugssteuerung aus zu kontrollieren, ob die Brems- bzw. Fangeinrichtung nach ihrer Betätigung auch wieder vollständig deaktiviert wurde, d. h.,ob sich die Rolle wirklich auch wieder vollständig in ihrer inaktiven Position befindet - so dass sicher ausgeschlossen ist, dass die Rolle beim Lösen der Brems- und Fangeinrichtung womöglich nicht vollständig gelüftet wurde und dann später auf Grund von Relativbewegungen der Aufzugskabine quer zur Führungsschiene plötzlich unbeabsichtigt mit der Führungsschiene in Kontakt kommt und so unvorhergesehen aktiviert wird. Vorteilhafterweise wird ein Solenoid verwendet, um die Rolle in ihrer inaktiven Position zu halten. Die Position des mit der Rolle verbundenen, magnetisch hin und her bewegbaren Metallkerns des Solenoids kann dann durch Messung der Impedanz des Solenoids überprüft werden.

Die von Anspruch 9 vorgeschlagene Maßnahme stellt sicher, dass es nicht zu einem Fressen zwischen der nach Aktivierung zunächst unter hoher Pressung und Friktion abwälzen-den Rolle und dem Druckkörper kommt. Stattdessen wird Verschleiß vermieden und es wird sichergestellt, dass immer bestimmungsgemäß definierte Reibungsverhältnisse zwischen der auf Anschlag gegangenen Rolle und dem Druckkörper vorliegen - so, dass sich die Brems- und Fangvorrichtung stets durch Bewegen der Kabine in umgekehrter Richtung wieder lösen lässt.

Außerdem leisten die durch Anspruch 9 i.V.m. Anspruch 10 vorgesehenen Maßnahmen auch unter einem anderen Aspekt einen wichtigen Beitrag dazu, dass die Brems- bzw. Fangeinrichtung auch für andere, notwendigerweise einen gewissen Verschleiß mit sich brinkann als gende Aufgaben eingesetzt werden kann als die bloße Aktivierung in Notfällen. Denn die Einsätze aus Lagerwerkstoff sind preisgünstige Austauschteile, die bei Bedarf eine einfache Instandsetzung der Brems- bzw. Fangeinrichtung ermöglichen.

Die von Anspruch 11 vorgesehene, bevorzugte Maßnahme zielt in die gleiche Richtung und sorgt darüber hinaus für immer gleiche Reibungsverhältnisse.

Die Erfindung wird nun anhand der Zeichnungen näher erläutert, wobei auch weitere Vorteile sichtbar werden.

Es zeigen:
- Fig. 1: schematisch ein Bremsorgan gemäß der Erfindung;
- Fig. 2: schematisch eine Brems- bzw. Fangeinrichtung nach der Erfindung in einem Horizontalschnitt;
- Fig. 3: diese Brems- bzw. Fangeinrichtung in Richtung des Pfeils III von Fig. 2 gesehen;
- Fig. 3b: eine der Fig. 3 weitgehend entsprechende, alternative Ausführungsform;
- Fig. 4: die schwimmende Lagerung der Bremseinrichtung;
- Fig. 5: eine mit einem Messingeinsatz L im Spaltendbereich ausgerüstete Variante der von Fig. 3 gezeigten Brems- bzw. Fangeinrichtung;
- Fig. 6: grob schematisch den von Fig. 5 im Einbauzustand gezeigten Einsatz L in demontierter Position;
- Fig. 7: die unterschiedlichen Tiefen bzw. Verläufe der Spalte für vier verschiedene Nutzlastbereichte, d. h. vier verschiedene Mitglieder einer Baureihe mit ansonsten identischen Druckkörpern.

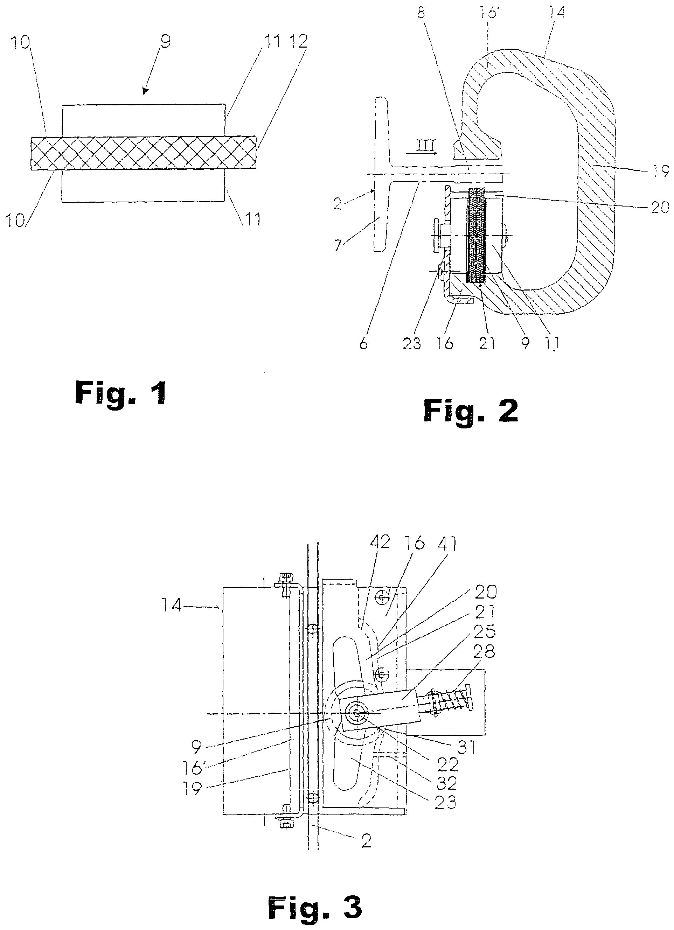

Wie aus Fig. 2 zu ersehen ist, weisen die Führungsschienen 2 einen über einen Steg 6 mit einem Schienenfuß 7 verbundenen Schienenkopf 8 auf.

Bei einer Brems- bzw. Fangeinrichtung nach der Erfindung ist ein Bremsorgan in Form einer Rolle 9 vorgesehen, die an ihren beiden Stirnflächen 10 (siehe Fig. 1) mit Schultern 11 versehen ist. Die Mantelfläche der Rolle 9 dient als Reibfläche 12. Zu diesem Zweck ist sie mit einer Rändelung versehen oder mit einem Reibbelag. Sie ist dazu bestimmt, an den Führungsschienen (siehe Fig. 2) zur Anlage zu kommen.

Die Fig. 2 zeigt eine erfindungsgemäße Bremseinrichtung 14 in einem Horizontalschnitt. Diese weist einen Druckkörper 19 auf, der im Wesentlichen einem U-Profil entspricht, wobei die beiden Schenkel 16, 16' im Bereich ihrer freien Enden die Führungsschienen 2 umfassen. Der Druckkörper 19 hat an seinem Schenkel 16 einen Spalt 20, in dem die Rolle 9 geführt ist. Dabei weist der Spalt 20 eine Nut 21 auf, die die Aufnahme der Reibfläche 12 (siehe Fig. 1) der Rolle 9 ermöglicht. Der Druckkörper besteht aus einem geeigneten Vergütungsstahl, wie er zur Herstellung von Schrauben- und Tellerfedern verwendet wird. Welche Vergütungsstähle bis dato für Schrauben- und Tellerfedern verwendet werden, ist dem Fachmann bekannt. Anders als ein Federstahl lässt sich ein solcher Vergütungsstahl recht einfach spanend bearbeiten, ohne später einer Wärmbehandlung zu bedürfen, die die Maßhaltigkeit eingefräster Spalten und Nuten in Frage stellt.

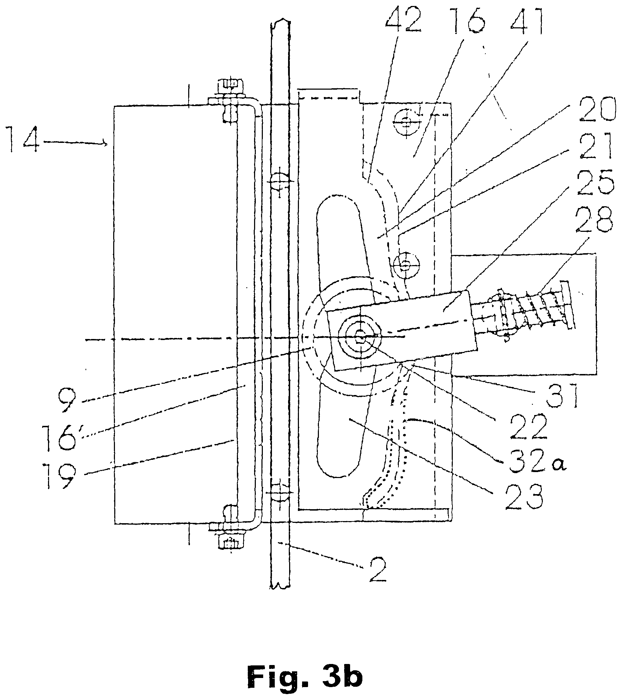

Die Rolle 9 ist drehbar auf einer Achse 22 (in Fig. 2 nicht dargestellt, siehe Fig. 3) gehalten, die einen Durchbruch 23 im Schenkel 16 durchsetzt und in einem Halter 25 gehalten ist.

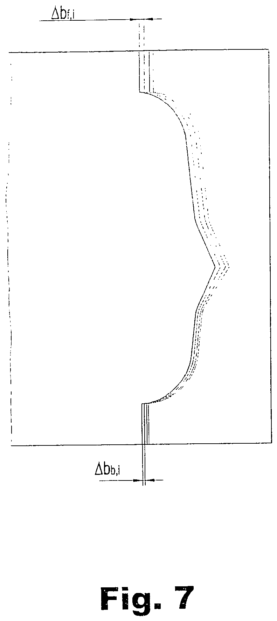

Sie läuft mit ihren Schultern 11 in einem Spalt, deren Kontur einem der von Fig. 7 gezeigten Spalte entspricht, wobei zwischen dem bei Aufwärtsfahrt und dem bei Abwärtsfahrt wirksamen Spaltbereich eine ausgeprägte, vorzugsweise V-förmig konturierte Rastfläche vorgesehen ist, die derart gestaltet ist, dass die Rolle (trotz der unvermeidlichen Reibungseinflüsse) bei Wieder-Deaktivierung in praktisch immer die gleiche Position zurückgezogen und gehalten wird.

Der besagte Halter 25 ist von einer Feder 28 umgeben, die als Druckfeder ausgebildet ist und die Rolle 9 in Richtung zur Führungsschiene 2 vorspannt. Dieser Feder 28 wirkt ein Solenoid (nicht dargestellt) entgegen, das von einer hier nicht gezeigten Elektronik angesteuert wird, die im Aufzugsschacht untergebracht ist, von der ggf. zumindest Teile auch kabinenfest eingebaut sein können.

Dabei wird das Solenoid entregt, wenn die Brems- bzw. Fangeinrichtung ansprechen soll, weil entweder ein Notfall, d. h. eine Übergeschwindigkeit, verliegt oder aber weil die Aufzugskabine im regulären Betrieb festgesetzt werden soll, z. B. zur Schutzraumabsicherung oder um ein Wegschleichen der Aufzugskabine aus ihner Haltestellenposition zu verhindern. Dadurch bewegt die Feder 28 den Halter 25 und damit die Rolle 9 gegen die Führungsschiene 2, so dass diese mit ihrer Reibfläche 12 (siehe Fig. 1) an der Führungsschiene 2 (siehe Fig. 3) zur Anlage kommt. Sie wird dadurch in Drehung versetzt.

Bei einer Abwärtsfahrt der Aufzugskabine dreht sich die Rolle 9 im Uhrzeigersinn (bei der Betrachtung gemäß Fig. 3). Dadurch wälzt sich die Rolle 9 an der Führungsschiene 2 ab und steigt nach oben. Da sich der Abstand zwischen der Nut 21 und der Führungsschiene 2 nach oben zu vermindert, wird die Rolle zwischen der Nut 21 und der Führungsschiene 2 eingeklemmt, wodurch sie in der Nut 21 reibt und daher bremst, so dass die nicht dargestellte Aufzugskabine zum Stillstand kommt. In der Endstellung berührt die Reibfläche 12 (siehe Fig. 1) an der Stelle 41 (siehe Fig. 3) die Nut 21, und an der Stelle 42 berühren die Schultern 11 (siehe Fig. 1) der Rolle 9 den Spalt 20 (siehe Fig. 3) neben der Nut 21. An der Stelle 42 ist die Tiefe der Nut 21 entsprechend groß, so dass die Reibfläche 12 (siehe Fig. 1) dort die Nut 21 (siehe Fig. 3) nicht berührt. Auf diese Weise wird der Bewegungsweg 5 der Rolle 9 begrenzt, ohne dass dies einen nennenswerten Einfluss auf die Bremskraft hat, weil die Reibung im Bereich der Schultern 11 (siehe Fig. 1) relativ gering ist (die Schultern sind glatt). Durch entsprechende Gestaltung des Abstandes der Nut 21 (siehe Fig. 3) von der Führungsschiene 2 können die dabei auftretenden Verzögerungen entsprechend vorbestimmt werden. Auf Grund des schwenkbaren Halters 25 und auf Grund des Durchbruchs 23 kann sich die Rolle 9 ungehindert entlang des Spalts 20 bewegen.

Bei einer Bremsung während der Aufwärtsfahrt, bei der nur geringere Bremskräfte erforderlich sind, dreht sich die Rolle 9 entgegen dem Uhrzeigersinn und wälzt sich daher nach unten ab.

Der Spalt 20 (bzw. die Nut 21) weist etwa in der Mitte die bereits zuvor angesprochene Vertiefung bzw. Rastfläche 31 zur Bestimmung der inaktiven Ruhestellung auf. In diese Stellung wird die Rolle 9 durch das erregte Solenoid gezogen. Dabei verbleibt ein Abstand zwischen der Führungsschiene 2 und der Rolle 9.

Um die Brems- bzw. Fangeinrichtung nach dem Abbremsen einer Abwärtsbewegung der Aufzugskabine wieder zu deaktivieren, wird die Aufzugskabine ein Stück weit nach oben gefahren. Die Schrägung des Spalts 20 und der Nut 21 sind so gewählt und aufeinander abgestimmt, dass die Rolle bei dieser Aufwärtsbewegung der Aufzugskabine nicht an der Führungsschiene entlanggleitet, sondern nun invers von ihr angetrieben wird und in die Richtung ihrer inaktiven Position im Bereich zwischen dem nach oben weisenden und dem nach unten weisenden Spaltabschnitt zurückwälzt. Sobald die Rolle in die Nähe ihrer inaktiven Position gelangt ist, wird sie von dem entsprechend beschalteten und auf die Aufbringung entsprechender Zugkräfte ausgelegten Solenoid eingefangen und sicher in ihre inaktive Position zurückgezogen - und zwar rechtzeitig, bevor die Rolle (durch die nun schon wieder merkliche Relativgeschwindigkeit der Fahrt aufnehmenden Aufzugskabine gegenüber der Führungsschiene) in den von der inaktiven Position der Rolle aus absteigenden Abschnitt des Spalts 20 hineingerissen wird und nun dort unbeabsichtigt bremst.

Entsprechendes gilt für das Deaktivieren der Brems- bzw. Fangeinrichtung nach dem Abbremsen einer Aufwärtsbewegung der Aufzugskabine.

Wie die Schrägung des Spalts 20 und der Nut 21 genau zu wählen sind, lässt sich nicht pauschal für alle möglichen Geometrien und Materialien der Brems- und Fangeinrichtung festlegen. Die genaue Auslegung im Einzelfall kann jedoch vom Fachmann leicht anhand seines Fachwissens und der üblichen Berechnungen bzw. einer überschaubaren Anzahl von Versuchen ermittelt werden - die bei derartigen Brems- bzw. Fangeinrichtungen ohnehin erforderlich sind, da die Brems- bzw. Fangeinrichtungen schon auf Grund der technischen Vorschriften des Aufzugsbaus so ausgelegt sein müssen, dass sie im Falle einer Notbremsung nicht so hart verzögern, dass die Fahrgäste zu Fall kommen.

Bei der in Fig. 3 dargestellten Ausführungsform ist zur Verminderung der Steifigkeit des Druckkörpers 19 im unteren Bereich ein Einschnitt 32 vorgesehen. Dadurch wird in dem einer Aufwärtsfahrt entsprechenden Abschnitt des Druckkörpers 19 eine entsprechend geringere Steifigkeit bewirkt und damit ein geringerer Anpressdruck der Rolle 9, wodurch sich eine geringere Verzögerung bei einer Bremsung ergibt. Alternativ (hier nicht gezeigt) werden die Rampen nicht spiegelsymmetrisch, sondern mit anderer Steigung oder Länge ausgeführt, wodurch sich ebenfalls der gewünschte Effekt einstellt.

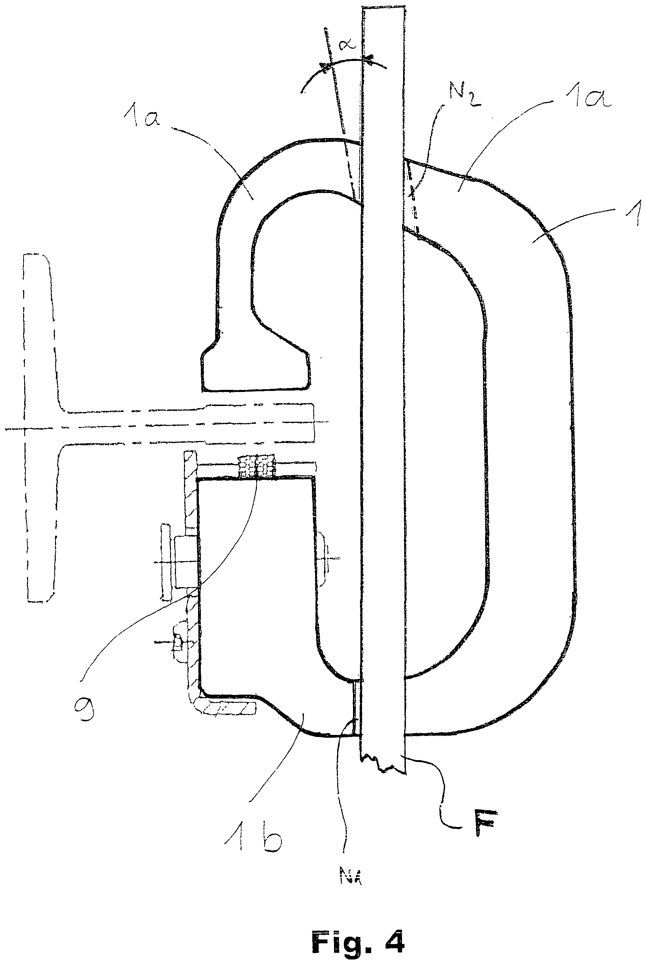

Der Druckkörper 19 ist, vergleichbar mit dem Sattel einer Kfz-Scheibenbremse, schwimmend an der Aufzugskabine gelagert. Die Fig. 4 veranschaulicht dies. Als Führung für die schwimmende Lagerung dienen pro Brems- bzw. Fangeinrichtung je zwei auf Abstand voneinander an der Aufzugskabine befestigte Flacheisen F, die sozusagen ein im Wesentlichen horizontal ausgerichtetes Schienenpaar bilden. Der Druckkörper 19 ist an seiner Ober- und Unterkante jeweils mit einer Nut N 1 bzw. N2 zum Eingriff für die besagten Flacheisen versehen, so dass der Druckkörper zwischen die beiden Flacheisen eingeschoben werden kann.

Beide Nuten weisen, verglichen mit der Breite der Flacheisen, ein gewisses seitliches Spiel auf. Darüber hinaus weist zumindest eine der beiden Nuten N1 und N2 eine besondere Gestaltung auf, sie verläuft nämlich insgesamt hinreichend schräg. Damit wird dem Umstand Rechnung getragen, dass der Druckkörper unter dem Einfluss der Kraft, mit dem die Rolle im Falle des Bremsens oder Fangens in den Spalt hineingezogen wird, elastisch aufgebogen wird, so dass die beiden jeweils an der Unterseite und der Oberseite angebrachten Nuten nicht mehr miteinander fluchten, sofern keine entsprechenden Maßnahmen getroffen werden. Der Schrägverlauf der zumindest einen Nut ist so gewählt, dass die Nut bei inaktiver Brems- bzw. Fangvorrichtung nach wie vor eine genau definierte,mit zulässigem Spiel versehene Führung gewährleistet, weil nämlich die Unterkante der linken und die Oberkante der rechten Nutflanke eine definierte Führungswirkung entfalten. Dadurch, dass die Nutflanken schräg verlaufen, ist gewährleistet, dass sich der Druckkörper ungehindert verformen kann, ohne die Führung zu beeinträchtigen.

Eine alternative, durch Fig. 3b gezeigte Ausführungsform bedient sich nicht eines Einschnittes 32, sondern weist stattdessen in ihrem für das Bremsen bei Aufwärtsfahrt zuständigen Bereich einen Spalt 20 und eine Nut 21 auf, deren Keilwinkel bzw. deren am Ende insgesamt resultierende Keilwirkung kleiner ist als diejenige des Spalts 20 und der Nut 21, die in dem für Abwärtsfahrt zuständigen Bereich angebracht sind. In Fig. 3b ist dies durch gestrichelte und punktierte Linien visualisiert. Die gestrichelten Linien zeigen Spalte 20 und Nuten 21, deren Keilwinkel bzw. resultierende Keilwirkung so dimensioniert ist, wie für Abwärtsfahrt erforderlich. Die punktierten Linien zeigen stattdessen den flacheren Keilwinkel bzw. die am Ende insgesamt weniger aggressive resultierende Keilwirkung der Spalte und der Nut 21, die für ein Bremsen in aufwärtiger Richtung zuständig sind. Vorteilhafterweise sind die Steigungen der Spalte 20 und der Nuten 21 in ihrem der Ruheposition der Rolle nahen Bereich gleich - nämlich dahingehend optimiert, dass die Rolle schon bei ihrem ersten Kontakt mit der Führungsschiene möglichst effektiv in den betreffenden Spalt 20 bzw. die betreffende Nut 21 hineingezogen wird. Dadurch wird ein in beide Fahrtrichtrungen gleichermaßen gutes Ansprechverhalten erzielt.

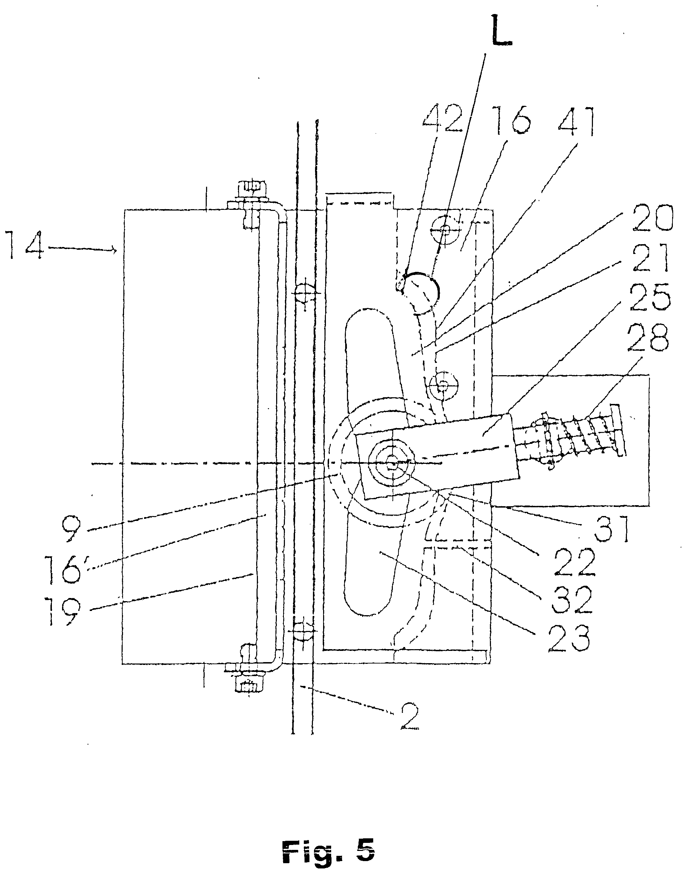

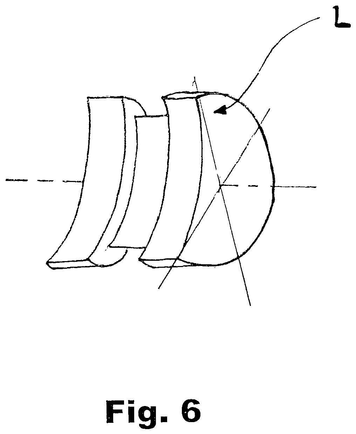

Die Endbereiche beider Spalten 20 sind mit Einsätzen L aus einem dem Festfressen vorbeugenden Lagerwerkstoff ausgerüstet, hier einem metallischen Lagerwerkstoff in Form eines geeigneten Buntmetalls, nämlich idealerweise Messing. Die Fig. 5 zeigt dies beispielhaft für den oberen Spalt- und Nutenbereich, wobei die Fig. 6 einen dieser Einsätze L in ausgebautem Zustand zeigt. Diese Einsätze L lassen sich sehr einfach anbringen. Dies,indem der noch nicht fertig bearbeitete Druckkörper 19 in den Endbereichen seiner späteren Spalten 20 und Nuten 21 mit je einer Querbohrung versehen wird. In diese Querbohrung wird dann ein entsprechend zugerichteter Bolzen aus dem Lagerwerkstoff eingesetzt bzw. -gepresst. Dann werden die Spalte 20 und die Nuten 21 gefräst. Der Lagerbolzen wird dabei angeschnitten und erhält dadurch automatisch die richtige Kontur. Diese Einsätze leisten einen wirksamen Beitrag dazu, eine Brems- bzw. Fangeinrichtung zu schaffen, die sich nach Aktivierung stets problemlos wieder lösen lässt, denn sie sorgen dafür, dass auch bei oft wiederholter Betätigung der Brems- bzw. Fangeinrichtung stets annähernd die gleichen Reibungsverhältnisse gewährleistet sind und kein "Festfahren" auftritt.

## Patentansprüche

1. Aufzug mit einer Brems- bzw. Fangeinrichtung für eine Aufzugskabine, die in einem Schacht entlang von vertikalen Führungsschienen (2) geführt ist, wobei eine an der Mantelflache mit einer Reibfläche (12) versehene Rolle (9) als Bremsorgan in einem an der Aufzugskabine gehaltenen Druckkörper (19) der Bremseinrichtung bewegbar gehalten ist, wobei die Achse der Rolle (9) normal zur Längsrichtung der Führungsschiene (2) verlauft, wobei weiters die Rolle mit abgesetzten Schultern (11) in einem parallel zur zugeordneten Führungsschiene (2) verlaufenden Spalt (20) des Druckkörpers (19) verschiebbar geführt ist, wobei der Spalt (20) eine Nut (21) zur Aufnahme der Reibflache (12) der Rolle (9) aufweist, wobei die Nut (21) gegen mindestens ein Ende zu einen sich vermindernden Abstand zur Führungsschiene (2) aufweist, so dass die Rolle (9) in dieser Stellung mit ihrer Reibfläche (12) einerseits an der Führungsschiene (2) und andererseits in der Nut (21) (Position 41) anliegt, wobei die Rolle (9) weiters in dieser Stellung mit ihren Schultern (11) an dem Spalt (20) neben der Nut (21) anliegt (Position 42), so dass eine weitere Verschiebung der Rolle (9) verhindert ist, wobei sich der Spalt (20) und die Nut (21) von einer die inaktive Ruhestellung bestimmenden Vertiefung (31) aus nach beiden Seiten erstrecken, und die Rolle (9) mit einem ihre inaktive Ruhestellung bestimmenden, von einer Aufzugssteuerung aus fernbedienbaren Aktuator verbunden ist, der derart gestaltet ist, dass er die Rolle mit im Wesentlichen senkrecht zur Führungsschiene gerichteten Betätigungskräften beaufschlagt und so die Rolle (9), solange die Brems- bzw. Fangeinrichtung passiv bleiben soll, in der ihre inaktive Ruhestellung bestimmenden Vertiefung hält und, sobald die Brems- bzw. Fangeinrichtung aktiv werden soll, seinerseits entsprechend von der Aufzugssteuerung beschaltet, die Rolle aus ihrer Ruhestellung hin zur Führungsschiene bewegt und mit ihr in Anlage bringt, wobei die Nut (21) und der Spalt (20) über die Bereiche hinweg, in denen sie im aktivierten Zustand der Brems- bzw. Fangeinrichtung eine Klemm- bzw. Friktionswirkung auf die Schultern (11) bzw. die Reibfläche (12) der Rolle (9) ausüben, so gestaltet sind, dass die Rolle (9) nach Umkehr der Bewegungsrichtung der Aufzugskabine von allein bis in eine Stellung zurückläuft, in der sie durch die Rückholkräfte des von der Aufzugssteuerung entsprechend geschalteten Aktuators zurück in ihre inaktive Ruhestellung gezogen werden kann und der Aktuator so ausgelegt ist, dass er die Rolle aus dieser Stellung heraus in ihre die inaktive Ruhestellung bestimmende Vertiefung zieht, bevor sie in die gegenläufige Nut bzw. den gegenläufigen Spalt hineingerissen wird und dadurch gegenläufig bremst, wobei der Druckkörper unter dem Einfluss der Kraft, mit dem die Rolle im Falle eines Bremsens oder Fangens in den Spalt hineingezogen wird, elastisch aufgebogen wird **dadurch gekennzeichnet, dass** der Druckkörper schwimmend an der Aufzugskabine gelagert ist.

2. Aufzug nach Anspruch 1, **dadurch gekennzeichnet, dass** der Druckkörper (19) die Führungsschiene (2) hintergreift,

3. Aufzug nach Anspruch 1 **dadurch gekennzeichnet, dass** der Druckkörper an seinem, in Einbaulage gesehen oberen und unteren Rand Führungsabschnitte in Form von Nuten, zur schwimmenden Lagerung des Druckkörpers zwischen zwei an der Aufzugskabine befestigten Schienen, vorzugsweise in Gestalt von im Wesentlichen parallel-horizontal montierten Flacheisen, aufweist.

4. Aufzug nach Anspruch 3 **dadurch gekennzeichnet, dass** die Nuten so gestaltet sind, dass sie in jedem Zustand der Brems- bzw. Fangeinrichtung deren hinreichend genaue schwimmende Lagerung gewährleisten, ohne jedoch im Falle einer Aktivierung der Brems- bzw. Fangeinrichtung die elastische Verformung von deren Druckkörper zu behindern.

5. Aufzug nach einem der Ansprüche 3 oder 4, **dadurch gekennzeichnet, dass** zumindest eine der Nuten bei berstimmungsgemäß montierter und inaktiver Brems- bzw. Fangeinrichtung schräg zu dem in ihr laufenden Schienenabschnitt ausgerichtet ist, derart, dass die Seitenwände zweier sich gegenüberliegender und zur Führung an derselben Schiene dienende Nuten erst dann im Wesentlichen miteinander fluchten, wenn der Druckkörper der Brems- bzw. Fangeinrichtung annähernd seine im bestimmungsgemäßen Betrieb maximal vorgesehene Verformung erreicht hat.

6. Aufzug nach einem der vorhergehenden Ansprüche, **dadurch gekennzeichnet, dass** der Druckkörper (19) im Bereich des sich nach unten erstreckenden Abschnitts des Spalts (20) einen senkrecht zur Führungsschiene (2) verlaufenden Einschnitt (32) aufweist.

7. Aufzug nach einem der vorhergehenden Anspruche, **dadurch gekennzeichnet, dass** das Rückhalteorgan ein schwenkbar gehaltenes Solenoid aufweist und die Rolle (9) durch eine Feder (28) gegen die zugeordnete Führungsschiene (2) vorgespannt ist.

8. Aufzug nach einem der vorhergehenden Ansprüche, **dadurch gekennzeichnet, dass** Mittel vorgesehen sind, mittels derer elektrisch detektiert werden kann, ob sich die Rolle (9) korrekt in ihrer inaktiven Position befindet.

9. Aufzug nach einem der vorhergehenden Ansprüche, **dadurch gekennzeichnet, dass** zumindest bei einem Spalt (20) der die Reibung der vollständig in den Spalt eingezogenen Rolle bestimmende Anschlag- bzw. Endbereich des Spaltes aus einem Lagerwerkstoff besteht.

10. Aufzug nach Anspruch 9, **dadurch gekennzeichnet, dass** der Lagerwerkstoff als ein zumindest abschnittweise kreiszylindrischer Einsatz (L) ausgestaltet ist, der in einer zumindest abschnittwelse kreiszylindrischen Ausnehmung des Druckkörpers (19) gehalten ist.

11. Aufzug nach Anspruch 10, **dadurch gekennzeichnet, dass** der Einsatz (L) derart verdrehbar in der Ausnehmung des Druckkörpers (19) gehalten ist. dass sich seine der Krafteinwirkung durch die Rolle (9) ausgesetzte Oberfläche unter Krafteinwirkung durch die Rolle relativ zur Rolle ausrichten kann.

12. Aufzug nach einem oder mehreren der Ansprüche 1-11, mit einer Aufzugssteuerung und einer Schachtkopierung **dadurch gekennzeichnet, dass** die Aufzugssteuerung ein Programm zur Herstellung einer vorläufigen Schutzraumabsicherung aufweist, mit folgenden Schritten:
- Heranfahren der Aufzugskabine in unmittelbare Nähe des herzustellenden Schutzraums,
- bei Erreichen einer ersten vorherbestimmten Position der Aufzugskabine Abbremsung der Aufzugskabine auf eine gegenüber der bisherigen Geschwindigkeit geringere Geschwindigkeit (optional),
- bei Annähern oder Erreichen einer zweiten vorherbestimmten Position Abschalten des Antriebs,
- bei Erreichen der zweiten vorherbestimmten Position Ansteuerung des Aktuators derart, dass er die Rolle (9) an die Schiene anlegt und die Aufzugskabine in Folge dessen abgebremst und an den Schienen festgesetzt wird,
- Warten auf eine externe Eingabe, dass der Schutzraum aufgehoben werden soll,
- nach Erhalt der externen Eingabe Anfahren des Aufzuges in entgegengesetzter Richtung, vorzugsweise mit verringerter Leistung (Sanftstart),
- Ansteuerung des Aktuators derart, dass er die Rolle (9) in ihre inaktive Ruhestellung zurückzieht.

## Claims

1. An elevator with a braking or catching device for an elevator cage guided in a shaft along vertical guide rails (2), wherein a roller (9) provided with a friction surface (12) on the lateral surface is held as a braking means in a movable manner in a pressing body (19) of the braking device retained on the elevator cage, wherein the axis of the roller (9) extends normally to the longitudinal direction of the guide rails (2), wherein the roller is further displaceably guided, with stepped shoulders (11), in a gap (20) of the pressing body (19) extending parallel to the associated guide rail (2), wherein the gap (20) has a groove (21) for receiving the friction surface (12) of the roller (9), wherein the groove (21) has a distance from the guide rail (2) that decreases towards at least one end, so that the roller (9) rests in this position with its friction surface (12) against the guide rail (2) on the one hand and in the groove (21) (position 41) on the other hand, wherein the roller (9), in this position, further rests with its shoulders (11) against the gap (20) next to the groove (21) (position 42), so that a further displacement of the roller (9) is prevented, wherein the gap (20) and the groove (21) extend towards both sides from a depression (31) defining the inactive rest position, and the roller (9) is connected to an actuator that determines its inactive rest position and is remotely controllable from an elevator control system, and which is configured in such a way that it applies operating forces to the roller that are substantially oriented perpendicularly to the guide rail and thus retains the roller (9), as long as the braking or catching device is supposed to remain passive, in the depression defining its inactive rest position and, as soon as the braking or catching device is supposed to become active, and, switched correspondingly by the elevator control system, moves the roller from its rest position towards the guide rail and brings it to rest against that, wherein the groove (21) and the gap (20), over those areas in which they exert a clamping or frictional action on the shoulders (11) or the friction surface (12) of the roller (9) in the activated state of the braking or catching device, are configured in such a way that the roller (9), after reversing the direction of movement of the elevator cage, automatically reverts to a position in which it can be pulled back into its inactive rest position by the returning forces of the actuator correspondingly switched by the elevator control system, and the actuator is configured in such a way that it pulls the roller from this position into its depression defining the inactive rest position before it is dragged into the groove extending in the opposite direction or the gap extending in the opposite direction and thus brakes in the opposite direction, wherein the pressing body is elastically bent open under the influence of the force with which the roller is pulled into the gap in the event of braking or catching, **characterized in that** the pressing body is supported in a floating manner on the elevator cage.

2. The elevator according to claim 1, **characterized in that** the pressing body (19) reaches behind the guide rail (2).

3. The elevator according to claim 1, **characterized in that** the pressing body comprises, at its upper and lower edge as viewed in the installation position, guide sections in the form of grooves, for floatingly supporting the pressing body between two rails attached to the elevator cage, preferably in the shape of flat iron bars mounted substantially parallel-horizontally.

4. The elevator according to claim 3, **characterized in that** the grooves are configured such that, in any condition of the braking or catching device, they ensure their sufficiently exact floating mounting, without, however, impeding the elastic deformation of the pressing body if the braking or catching device is activated.

5. The elevator according to any one of the claims 3 or 4, **characterized in that**, in the case where the braking or catching device is installed as intended and is inactive, at least one of the grooves is oriented obliquely relative to the rail section running therein, such that the side walls of two grooves that are opposite to each other and serve for guidance on the same rail are substantially aligned only when the pressing body of the braking or catching device has almost reached its deformation that is maximally intended during operation as intended.

6. The elevator according to any one of the preceding claims, **characterized in that** the pressing body (19), in the region of the downwardly extending section of the gap (20), has a slot (32) extending perpendicularly to the guide rail (2).

7. The elevator according to any one of the preceding claims, **characterized in that** the retaining means has a pivotably held solenoid and the roller (9) is biased against the associated guide rail (2) by a spring (28).

8. The elevator according to one of the preceding claims, **characterized in that** means are provided with which it is possible to detect electrically whether the roller (9) is properly located in its inactive position.

9. The elevator according to one of the preceding claims, **characterized in that**, at least in the case of one gap (20), the stop or end portion of the gap determining the friction of the roller, which is completely pulled into the gap, consists of a bearing material.

10. The elevator according to claim 9, **characterized in that** the bearing material is configured as an insert (L) which is, at least in some portions, circular cylindrical, and which is retained in a recess of the pressing body (19) that is, at least in some portions, circular cylindrical.

11. The elevator according to claim 10, **characterized in that** the insert (L) is retained in the recess of the pressing body (19) in such a rotatable manner that its surface that is exposed to the action of the forces by the roller (9) is capable of orienting itself relative to the roller under the action of the forces by the roller.

12. An elevator according to any one or several of the claim 1 - 11, with an elevator control system and a shaft locating system, **characterized in that** the elevator control system has a program for establishing a temporary safeguard for a safety space, with the following steps:
- driving the elevator cage in to the immediate vicinity of the safety space to be established,
- upon reaching a first predefined position of the elevator cage, braking the elevator cage to a speed lower than the speed so far (optional),
- upon approaching or reaching a second predefined position, switching off the drive unit,
- upon reaching the second predefined position, activation of the actuator in such a way that it abuts the roller (9) against the rail and the elevator cage is consequently braked and fixed on the rails,
- waiting for an external input that the safety space is to be cancelled,
- upon receiving the external input, starting to drive the elevator cage in the opposite direction, preferably with reduced power (soft start),
- activating the actuator in such a way that it pulls back the roller (9) into its inactive rest position.

## Revendications

1. Ascenseur comprenant un agencement de freinage ou de blocage pour une cabine d'ascenseur, qui est guidé dans une cage le long de rails de guidage verticaux (2), dans lequel un rouleau (9) doté d'une surface de friction (12) sur sa surface enveloppe est maintenu, à titre d'organe de freinage, de façon déplaçable dans un corps presseur (19), maintenu sur la cabine d'ascenseur, de l'agencement de freinage, dans lequel l'axe du rouleau (9) s'étend perpendiculairement à la direction longitudinale du rail de guidage (2), dans lequel le rouleau est en outre guidé, au moyen d'épaulements abaissés (11), dans une fente (20) du corps presseur (19) qui s'étend parallèlement au rail de guidage associé (2), dans lequel la fente (20) comprend une gorge (21) pour la réception de la surface de friction (12) du rouleau (9), dans lequel la gorge (21) présente, en direction d'au moins une extrémité, une distance réduite par rapport au rail de guidage (2), de sorte que le rouleau s'applique dans cette position avec sa surface de friction (12) d'une part contre le rail de guidage (2) et d'autre part dans la gorge (21) (position 41), dans lequel le rouleau (9) s'applique en outre dans cette position au moyen de ses épaulements (11) contre la fente (20) à côté de la gorge (21) (position 42), de sorte qu'une poursuite du déplacement du rouleau (9) est empêchée, dans lequel la fente (20) et la gorge (21) s'étendent vers les deux côtés depuis un renfoncement (31) qui détermine la position de repos inactive, et le rouleau (9) est relié à un actionneur, qui détermine sa position de repos inactive et qui peut être télécommandé depuis une commande de l'ascenseur, l'actionneur étant conçu de telle façon qu'il sollicite le rouleau par des forces d'actionnement orientées sensiblement perpendiculairement au rail de guidage et maintient ainsi le rouleau (9) dans le renfoncement qui détermine sa position de repos inactive, aussi longtemps que l'agencement de freinage ou de blocage doit rester passif et, dès que l'agencement de freinage ou de blocage doit devenir actif, il est de son côté activé de façon correspondante par la commande de l'ascenseur en déplaçant le rouleau depuis sa position de repos jusqu'au rail de guidage et l'amène en contact avec celui-ci, dans lequel la gorge (21) et la fente (20) sont ainsi conçues, au-delà des régions dans lesquelles elles exercent dans l'état activé de l'agencement de freinage ou de blocage un effet de coincement ou de friction sur les épaulements (11) ou sur les surfaces de friction (12) du rouleau (9), qui sont conçu(e)s de telle façon que le rouleau (9), après inversion de la direction de déplacement de la cabine d'ascenseur, retourne de lui-même jusque dans une position dans laquelle il peut être tiré, par les forces de rappel de l'actionneur activé de façon correspondante par la commande de l'ascenseur, jusque dans sa position de repos inactive, et l'actionneur est ainsi conçu qu'il tire le rouleau hors de cette position jusque dans le renfoncement qui détermine la position de repos inactive, avant que celui-ci soit forcé en pénétration dans la gorge opposée ou dans la fente opposée et soit ainsi freiné par déplacements opposés, et le corps presseur, sous l'influence de la force avec laquelle rouleau est tiré en pénétration dans la fente dans le cas d'un freinage ou d'un blocage, est cintré élastiquement, **caractérisé en ce que** le corps presseur est monté en flottement sur la cabine d'ascenseur.

2. Ascenseur selon la revendication 1, **caractérisé en ce que** le corps presseur (19) engage le rail de guidage (2) par l'arrière.

3. Ascenseur selon la revendication 1, **caractérisé en ce que** le corps presseur comporte, à sa bordure supérieure et à sa bordure inférieure, vu dans la situation montée, des portions de guidage sous la forme de gorges, pour le montage flottant du corps presseur entre deux rails fixés à la cabine d'ascenseur, de préférence sous la configuration de fers plats montés sensiblement horizontalement et parallèlement.

4. Ascenseur selon la revendication 3,
**caractérisé en ce que** les gorges sont ainsi conçues que, dans chaque état de l'agencement de freinage ou de blocage, elles assurent son montage en flottement et de manière suffisamment précise, sans cependant empêcher,
dans le cas d'une activation de l'agencement de freinage ou de blocage, la déformation élastique de leur corps presseur.

5. Ascenseur selon l'une des revendications 3 ou 4, **caractérisé en ce que**, lorsque l'agencement de freinage ou de blocage est monté conformément à sa destination et inactif, l'une au moins des gorges est orientée en oblique par rapport à la portion de rail qui court en lui-même, de telle façon que les parois latérales de deux gorges mutuellement opposées et servant au guidage sur le même rail, viennent essentiellement en affleurement l'une avec l'autre uniquement quand le corps presseur de l'agencement de freinage ou de blocage a approximativement atteint sa déformation prévue au maximum en fonctionnement conforme à sa destination.

6. Ascenseur selon l'une des revendications précédentes, **caractérisé en ce que** le corps presseur (19) comprend, dans la région de la portion de la fente (20) qui s'étend vers le bas, une entaille (32) qui s'étend perpendiculairement au rail de guidage (2).

7. Ascenseur selon l'une des revendications précédentes, **caractérisé en ce que** l'organe de retenue comprend un solénoïde maintenu en pivotement, et le rouleau (9) est précontraint par un ressort (28) contre le rail de guidage (2) associé.

8. Ascenseur selon l'une des revendications précédentes, **caractérisé en ce qu'**il est prévu des moyens, à l'aide desquels il est possible de détecter par voie électrique si le rouleau (9) se trouve correctement dans sa position inactive.

9. Ascenseur selon l'une des revendications précédentes, **caractérisé en ce que** pour l'une au moins des fentes (20), la zone de butée ou zone terminale de la fente qui détermine la friction du rouleau entièrement introduit dans la fente est en un matériau utilisé pour les paliers.

10. Ascenseur selon la revendication 9, **caractérisé en ce que** le matériau utilisé pour les paliers est conçu comme un insert (L) au moins localement cylindrique à base circulaire, qui est maintenu dans un évidement, au moins localement cylindrique à base circulaire, du corps presseur (19).

11. Ascenseur selon la revendication 10, **caractérisé en ce que** l'insert (L) est maintenu avec possibilité de rotation dans l'évidement du corps presseur (19) de telle façon que sa surface, exposée à l'action de la force par le rouleau (9), est capable de s'orienter par rapport au rouleau sous l'action de la force du rouleau.

12. Ascenseur selon l'une ou plusieurs des revendications 1 à 11, comprenant une commande d'ascenseur et un sélecteur d'étage, **caractérisé en ce que** la commande d'ascenseur comprend un programme pour établir une sécurisation temporaire d'un espace de protection, comprenant les étapes suivantes consistant à :
- rapprocher la cabine d'ascenseur jusqu'au voisinage immédiat de l'espace de protection à établir,
- lors de l'atteinte d'une première position prédéterminée de la cabine d'ascenseur, freiner la cabine d'ascenseur jusqu'à une vitesse plus faible par rapport à la vitesse antérieure (en option),
- lors de l'approche ou de l'atteinte d'une seconde position prédéterminée, couper l'entraînement,
- lors de l'atteinte de la seconde position prédéterminée, piloter l'actionneur de telle façon qu'il applique le rouleau (9) contre le rail et à la suite de cela, qu'il freine. la cabine d'ascenseur et l'immobilise sur les rails,
- attendre un ordre externe, que l'espace de protection doit être annulé,
- après réception de l'ordre externe, rapprocher l'ascenseur en direction opposée, de préférence avec une puissance réduite (démarrage en douceur),
- piloter l'actionneur de telle façon qu'il tire le rouleau (9) en retrait jusque dans sa position de repos inactive.
